# EUROPÄISCHE PATENTSCHRIFT

(11) **EP 0 710 215 B1**
(45) Veröffentlichungstag und Bekanntmachung des Hinweises auf die Patenterteilung: **21.01.1998**
(21) Anmeldenummer: 94915106.2
(22) Anmeldetag: 23.04.1994
(51) Int. Cl.: C01B 15/10, C11D 3/39, C11D 17/00

(54) **UMHÜLLTE NATRIUMPERCARBONATPARTIKEL, VERFAHREN ZU DEREN HERSTELLUNG UND DEREN VERWENDUNG**
COATED SODIUM PERCARBONATE PARTICLES, METHOD OF PRODUCING THEM AND THEIR USE
PARTICULES ENROBEES DE PERCARBONATE DE SODIUM, LEUR PROCEDE DE FABRICATION ET LEUR UTILISATION

(30) Priorität: 17.07.1993 DE 4324104
(43) Veröffentlichungstag der Anmeldung: 08.05.1996
(73) Patentinhaber: Degussa Aktiengesellschaft, 60311 Frankfurt (DE)
(72) Erfinder: BERTSCH-FRANK, Birgit, D-79618 Rheinfelden (DE); BEWERSDORF, Martin, D-63571 Gelnhausen (DE); KLASEN, Claas-Jürgen, D-63579 Freigericht (DE); LIESER, Thomas, D-63457 Hanau (DE); MÜLLER, Klaus, D-63594 Hasselroth (DE); ROLLMANN, Jürgen, D-63762 Pflaumheim (DE)
(86) Internationale Anmeldenummer: EP9401271
(87) Internationale Veröffentlichungsnummer: WO9502555

(56) Entgegenhaltungen:
- EP-A- 0 405 797
- EP-A- 0 546 815
- DE-A- 2 622 610
- FR-A- 2 226 460
- FR-A- 2 424 228

## Beschreibung

Die Erfindung richtet sich auf umhüllte Natriumpercarbonatpartikel aus einem Kern aus Natriumpercarbonat und einer Natriumcarbonat enthaltenden Umhüllung, welche 1 bis 25 Gew.-% des Natriumpercarbonats ausmacht. Die umhüllten Natriumpercarbonatpartikel, welche zusätzlich eine Magnesiumverbindung als Hüllkomponente enthalten, zeichnen sich durch eine hohe Lagerstabilität in Gegenwart von Waschmittelpulvern in feucht-warmer Umgebung aus. Die Erfindung richtet sich ferner auf ein Verfahren zur Herstellung der umhüllten Natriumpercarbonatpartikel durch Aufbringen einer ein-oder mehrschichtigen Umhüllung in der Wirbelschicht. Die Erfindung betrifft auch die Verwendung der umhüllten Natriumpercarbonatpartikel als Bleichkomponenten in Wasch-, Reinigungs- und Bleichmittelzusammensetzungen.

Natriumpercarbonat (2 Na₂CO₃ · 3 H₂O₂) findet als Aktivsauerstoffkomponente in Wasch-, Bleich- und Reinigungsmitteln Verwendung. Aufgrund der ungenügenden Lagerstabilität des Natriumpercarbonats in warm-feuchter Umgebung sowie in Gegenwart verschiedener Wasch- und Reinigungsmittelkomponenten muß Natriumpercarbonat gegen den Verlust an Aktivsauerstoff (Oₐ) stabilisiert werden. Ein wesentliches Prinzip zur Stabilisierung besteht darin, die Natriumpercarbonatteilchen mit einer Hülle aus stabilisierend wirkenden Komponenten zu umgeben.

Bereits die GB 174 891 lehrt, aktivsauerstoffhaltige Verbindungen zwecks Erhöhung der Lagerstabilität mit einer Natriumwasserglaslösung zu besprühen und anschließend zu trocken. Auch im Verfahren der DE-OS 26 52 776 wird Natriumpercarbonat durch Aufbringen einer ausreichenden Menge Silikat auf die durch Kristallisation gewonnenen Natriumpercarbonatteilchen stabilisiert. Eine ausreichende Stabilisierung, insbesondere in Gegenwart von Wasch- und Reinigungsmitteln, wird durch die vorgenannten Verfahren nicht erzielt.

Aus der DE-OS 24 17 572 und DE-PS 26 22 610 sind Verfahren zum Stabilisieren von teilchenförmigem Natriumpercarbonat bekannt, wobei man als Hüllsubstanz entweder eine gemischte Verbindung, die durch Kristallisation eines Natriumcarbonats mit anderen Mineralsalzen wie Natriumbicarbonat und/oder Natriumsulfat gebildet wurde, oder ein Gemisch aus Natriumcarbonat, Natriumsulfat und einem Natriumsilikat verwendet wird. Bei diesen Verfahren wird eine wäßrige Lösung der Bestandteile des Hüllmaterials in einer Wirbelschicht auf Natriumpercarbonatpartikel unter Aufrechterhaltung einer Temperatur der Wirbelschicht zwischen 30 und 80 °C aufgesprüht, wobei sich durch Verdampfen des eingebrachten Wassers eine feste Umhüllung ausbildet.

Trotz deutlich verbesserter Stabilität der so umhüllten Natriumpercarbonatpartikel nimmt der Aktivsauerstoffgehalt bei längerer Lagerung in Gegenwart eines Waschmittelpulvers noch zu stark ab.

Bekannt geworden sind auch zahlreiche Verfahren zur wirksamen Stabilisierung von Natriumpercarbonat unter Verwendung von Borverbindungen, wie Borsäuren (DE-PS 28 00 916), Boraten (DE-OS 33 21 082) und Perboraten (DE-PS 26 51 442 und DE-PS 28 10 379). Trotz teilweise sehr guter Stabilisierungswirkung zeigt der Markt zunehmend Interesse an umhülltem Natriumpercarbonat, das frei von Borverbindungen ist.

Eine weitere Gattung von Hüllkomponeten ist aus der US 4,325,933 bekannt: Die Stabilisierung erfolgt hiernach durch Behandlung des Natriumpercarbonats mit einer wäßrigen Lösung eines Erdalkalisalzes, darunter Magnesiumsulfat oder Magnesiumchlorid. Bei der Behandlung der Natriumpercarbonatpartikel bildet sich auf der Oberfläche derselben eine Schicht aus einem Erdalkalicarbonat, wodurch der hygroskopische Charakter des Natriumpercarbonats gemindert und die Stabilität erhöht wird. Es zeigte sich jedoch, daß derartig stabilisierte Produkte über keine ausreichende Lagerstabilität verfügen.

Die EP-A 0 405 797 lehrt Natriumpercarbonatzusammensetzungen hoher Sicherheit; gemäß einer Ausführungsform enthält die Zusammensetzung eine Verbindung aus der Reihe der anorganischen Magnesiumverbindungen und zusätzlich ein Alkalimetallcarbonat. Bei der genannten Zusammensetzung handelt es sich nicht um Natriumpercarbonatteilchen mit einer gleichmäßigen, auf den Natriumpercarbonatkern fest haftenden Umhüllung, sondern um ein Stoffgemisch, das auch granuliert sein kann. Bei der Nacharbeitung des in dem genannten Dokument angegebenen Verfahrens zur Herstellung der genannten Zusammensetzungen wurde festgestellt, daß die Lagerstabilität derartiger Zusammensetzungen in Gegenwart eines Waschmittelpulvers in feucht-warmer Umgebung nicht ausreichend ist - siehe die Vergleichsbeispiele VB 2 bis VB 4.

Gemäß EP-A 0 623 553, ein Dokument gemäß Art. 54(3) EPÜ, läßt sich Natriumpercarbonat durch Aufbringen einer oder mehrerer Hüllschichten stabilisieren, wobei die eine oder mehrere Hüllschichten enthalten: (a) ein Silikat, (b) Magnesiumsulfat und (c) ein Alkalimetallsalz aus der Reihe Alkalimetallcarbonat, -bicarbonat und -sulfat. Bevorzugt enthält das Natriumpercarbonat als erste Schicht ein Silikat oder ein Gemisch aus einem Silikat und einem Alkalimetallcarbonat und als zweite, also äußere Schicht ein Mg-Salz. Die Umkehrung der Reihenfolge führt zu einem verminderten Aktivsauerstoffgehalt.

Aufgabe der Erfindung ist demgemäß, neue umhüllte Natriumpercarbonatpartikel mit hoher Lagerstabilität in Gegenwart von Waschmittelpulvern bereitzustellen, wobei die Umhüllung frei von Borverbindungen sein sollte. Die Lagerstabilität der neuen umhüllten Natriumpercarbonatpartikel sollte vorzugsweise diejenige übersteigen, welche mit bisher bekannten borfrei umhüllten Natriumpercarbonatpartikeln erhältlich war. Eine weitere Aufgabe der Erfindung richtet sich auf die Bereitstellung eines geeigneten Verfahrens zur Herstellung besonders lagerstabiler borfrei umhüllter Natriumpercarbonatpartikel.

Gefunden wurden ein- oder mehrschichtig umhüllte Natriumpercarbonatpartikel mit einem Kern aus Natriumpercarbonat und einer Natriumcarbonat und eine Magnesiumverbindung und gegebenenfalls weitere Hüllkomponenten enthaltenden Umhüllung, welche 0,5 bis 25 Gew.-% (berechnet hydratfrei) des Natriumpercarbonats ausmacht, ausgenommen ein mit Magnesiumsulfat, Alkalisilikat und Natriumcarbonat umhülltes Natriumpercarbonat, die dadurch erhältlich sind, daß man auf die in einer Wirbelschicht befindlichen Natriumpercarbonatpartikel unter Aufrechterhaltung einer Wirbelschichttemperatur von 30 bis 100 °C gleichzeitig oder in beliebiger Reihenfolge hintereinander eine mindestens Natriumcarbonat enthaltende wäßrige Lösung und eine mindestens ein Magnesiumsalz aus der Reihe Mg-sulfat, Mg-chlorid und Mg-carboxylat einer Carbonsäure mit 1 bis 4 C-Atomen enthaltende wäßrige Lösung sprüht, wobei Wasser verdampft wird.

Die erfindungsgemäßen umhüllten Natriumpercarbonatpartikel bestehen somit aus einem Natriumpercarbonatkern und einer ein- oder mehrschichtigen Umhüllung, welche die stabilisierend wirkenden Komponenten in hydratfreier und/oder teilweise hydratisierter Form enthält. Der Natriumpercarbonatkern ist vollständig von der darauf festhaftenden Umhüllung umgeben, wobei die Dicke der Hüllschicht über das gesamte Korn etwa konstant ist. Umhülltes Natriumpercarbonat mit Magnesiumsulfat, Alkalimetallsilikat und Natriumcarbonat in einer einzigen oder in mehreren Hüllschichten ist nicht erfindungsgemäß.

Die Menge der Umhüllung, berechnet hydratfrei, macht im allgemeinen 0,5 bis 25 Gew.-% des Natriumpercarbonats aus; zwar ist es möglich, Partikel mit einer Umhüllung unter 0,5 Gew.-% beziehungsweise oberhalb 25 Gew.-% herzustellen, jedoch weisen die Produkte im ersten Fall eine nur mäßige Lagerstabilität auf und im letzten Fall einen entsprechend der zunehmenden Menge an Hüllmaterial reduzierten Gehalt an Aktivsauerstoff.

In bevorzugten Produkten macht die Umhüllung, berechnet hydratfrei, insgesamt etwa 1 bis 15 Gew.-% des Natriumpercarbonats aus.

Erfindungswesentliches Merkmal ist, daß die Umhüllung sowohl Natriumcarbonat als auch eine oder mehrere Magnesiumverbindungen enthält, wobei die genannten Stoffe in wasserfreier und/oder in teilweise hydratisierter Form vorliegen können. Unter teilweise hydratisiert" wird verstanden, daß in erfindungsgemäß umhüllten Natriumpercarbonatpartikeln die maximal mögliche Wasseraufnahmekapazität der Hüllkomponenten durch Hydratbildung noch nicht erschöpft ist. Im Falle einer beispielsweise aus MgSO₄ und Na₂CO₃ in Form ihrer Hydrate bestehenden Umhüllung ist die Wasseraufnahmekapazität erschöpft, wenn Na₂CO₃ als Monohydrat und MgSO₄ als Heptahydrat vorliegen.

Die Umhüllung enthält eine oder mehrere Magnesiumverbindungen aus der Reihe Magnesiumchlorid sowie Magnesiumsalzen einer Carbonsäure mit 1 bis 4 C-Atomen; eingeschlossen sind ferner die Hydrate der genannten Verbindungen. Unter den Magnesiumsalzen der Carbonsäuren, welche eine oder zwei Carboxylgruppen und gegebenenfalls eine oder zwei Hydroxylgruppen enthalten können, wird Magnesiumacetat bevorzugt. Bei der Herstellung einschichtig umhüllter Natriumpercarbonatpartikel kann die Umhüllung auch Reaktionsprodukte der vorgenannten Salze mit Natriumcarbonat und oder anderen gegebenenfalls anwesenden Hüllkomponenten, wie beispielsweise Natriumsilikaten, enthalten; auf diese Weise können beispielsweise auch Magnesiumcarbonat, basisches Magnesiumcarbonat, gemischte Salze aus Natriumcarbonat und Magnesiumsulfat und im Falle der Anwesenheit von Natriumsilikaten auch Magnesiumsilikate als Bestandteile der Umhüllung auftreten.

Erfindungsgemäß umhüllte Natriumpercarbonatpartikel können eine einschichtige oder mehrschichtige, vorzugsweise zwei- oder dreischichtige, Umhüllung aufweisen. Die Umhüllung bevorzugter umhüllter Natriumpercarbonatpartikel umfaßt mindestens eine Schicht aus im wesentlichen Natriumcarbonat und mindestens eine Schicht aus im wesentlichen einer oder mehreren Magnesiumverbindungen. Bei dem genannten, mindestens zweischichtigen Aufbau der Umhüllung lassen sich Reaktionen zwischen den verschiedenen Komponenten der Umhüllung auf die jeweilige Grenzfläche der Schichten begrenzen. Eine zwei- oder dreischichtige Umhüllung der vorgenannten Art wirkt sich vorteilhaft auf die Lagerstabilität der umhüllten Natriumpercarbonatpartikel aus.

Bei zweischichtigem Aufbau der Umhüllung kann die Natriumcarbonat enthaltende Schicht auch andere Stabilisatoren enthalten, sie ist aber vorzugsweise frei von Magnesiumverbindungen. Die zusätzlichen Stabilisatoren sollten in Gegenwart von Natriumcarbonat klar löslich sein und auch in der festen Umhüllung keine stabilitätsmindernde Wirkung entfalten. Wirksame Komponenten, welche sich in der Natriumcarbonat enthaltenden Schicht befinden können, sind Alkalimetallsilikate, insbesondere Natriumsilikate mit einem Molverhältnis von SiO₂ zu Na₂O im Bereich von 4 zu 1 bis 1 zu 1, vorzugsweise im Bereich von 2,5 zu 1 bis 3,5 zu 1. Obgleich bei mehrschichtigem Aufbau der Umhüllung die mindestens eine Magnesiumverbindung enthaltende Schicht auch andere Komponenten, darunter auch Natriumcarbonat, enthalten kann, ist es meist zweckmäßiger, in dieser Schicht keine anderen Verbindungen anzuordnen als die infragekommenden Magnesiumverbindungen. Vorzugsweise besteht diese Schicht aus Magnesiumchlorid oder Magnesiumacetet und/oder teilweise deren Hydraten.

Außer einer im wesentlichen Natriumcarbonat und einer im wesentlichen mindestens eine Magnesiumverbindung enthaltenden Schicht können bevorzugte umhüllte Natriumpercarbonatpartikel zusätzlich eine oder mehrere Schichten aus im wesentlichen Alkalimetallsilikaten, insbesondere Natriumsilikaten der vorgenannten Zusammensetzung, aufweisen.

Bezüglich der Stabilisierungswirkung hat die Reihenfolge des Schichtaufbaus der Umhüllung nur einen mäßigen Einfluß. Die Schichtenfolge kann jedoch einen gewissen Einfluß auf die Rieselfähigkeit der umhüllten Partikel haben. Um ein besonders rieselfähiges Produkt zu erhalten, kann es daher vorteilhaft sein, die Umhüllung so aufzubauen, daß die äußerste Schicht im wesentlichen aus Natriumcarbonat besteht.

Bevorzugte umhüllte Natriumpercarbonatpartikel enthalten in einer oder in mehreren Hüllschichten als stabilisierende Komponenten im wesentlichen Natriumcarbonat und/oder Hydrate desselben in einer Menge von 0,2 bis 10 Gew.-%, vorzugsweise 0,5 bis 5 Gew.-%, berechnet als Na₂CO₃, eine oder mehrere Magnesiumverbindungen und/oder Hydrate derselben in einer Menge von 1 bis 10 Gew.-%, vorzugsweise 0,5 bis 5 Gew.-%, berechnet als MgSO₄, und Natriumsilikate und/oder Hydrate derselben mit einem Molverhältnis von SiO₂ zu Na₂O von 4 zu 1 bis 1 zu 1 in einer Menge von 0 bis 5 Gew.-%, vorzugsweise 0,2 bis 3 Gew.-%, berechnet hydratfrei, wobei sich die angegebenen Mengen jeweils auf Natriumpercarbonat beziehen.

Zusätzlich zu den genannten Stoffen und den gegebenenfalls daraus entstandenen Reaktionsprodukten können in einer oder mehreren Hüllschichten weitere stabilisierende Komponenten in im allgemeinen geringer Menge, d. h. etwa bis zu 2 Gew.-%, bezogen auf Natriumpercarbonat, enthalten sein. Bei den zusätzlichen Komponenten handelt es sich insbesondere um typische Aktivsauerstoffstabilisatoren, wie Chelatkomplexe bildende Aminopolycarbonsäuren vom Typ Ethylendiamintetraessigsäure und Diethylentriaminpentaessigsäure; Chelatkomplexe bildende Phosphonsäureverbindungen, wie etwa 1-Hydroxyethan-1,1-diphosphonsäure und Ethylendiamin-tetra(methylphosphonsäure) und Diethylentriamin-penta(methylenphosphonsäure) und deren Salze; wasserlösliche Polymere mit zur Komplexbildung befähigten Carboxyl- und Hydroxylgruppen, wie etwa Polymere auf der Basis von Alphahydroxyacrylsäure; auch Stabilisatoren vom Typ der Pyridincarbonsäuren. wie etwa der Dipicolinsäure, können zugegen sein.

Sofern durch Sprühgranulation erzeugtes Natriumpercarbonat umhüllt wird, kann die Hüllmenge gegenüber den vorgenannten Mengen reduziert werden, weil hier die Oberfläche der zu umhüllenden Partikel glatter ist als im Falle von durch Kristallisation erzeugten Partikeln.

Wie aus den Beispielen und Vergleichsbeispielen hervorgeht, zeichnen sich die erfindungsgemäß umhüllten Natriumpercarbonatpartikel gegenüber vorbekannten, gleichfalls borfrei umhüllten Partikeln durch die unerwartet hohe Lagerstabilität in Gegenwart eines zeolithhaltigen Waschmittelturmpulvers aus: Nach 8-wöchiger Lagerung bei 30 °C und 80 % relativer Feuchte liegt der relative Aktivsauerstoffgehalt (Oₐ-Erhalt) erfindungsgemäßer Produkte in Abhängigkeit vom Schichtaufbau, der Hüllmenge sowie dem Herstellverfahren des eingesetzten Natriumpercarbonats zwischen etwa 70 bis nahezu 100 %. Besonders bevorzugte umhüllte Natriumpercarbonatpartikel zeigen unter den genannten Lagerbedingungen in Waschmittelabmischungen nach 8 Wochen einen Oₐ-Erhalt zwischen 93 % und etwa 97 %.

Zu den in der Fachwelt häufig angewandten Verfahren zum Aufbringen einer Hüllschicht auf zu stabilisierende Produkte gehören Verfahren im Mischer, wobei das zu stabilisierende Produkt, gegebenenfalls nach Befeuchten desselben, mit pulverförmigen Stabilisatoren behandelt wird, und sogenannte Wirbelschichtverfahren, wobei die Hüllkomponenten in Form einer wäßrigen Lösung auf das in der Wirbelschicht befindliche zu stabilisierende Produkt aufgesprüht und das hierbei eingebrachte Wasser gleichzeitig verdampft wird. Es wurde gefunden, daß die Umhüllung von Natriumpercarbonat mit den erfindungsgemäßen Hüllkomponenten in der Wirbelschicht zu einem Produkt mit einer wesentlich höheren Lagerstabilität führt als die vorbekannte Umhüllung in einem Mischer.

Zur Herstellung von erfindungsgemäß umhülltem Natriumpercarbonat werden auf die in einer Wirbelschicht befindlichen zu umhüllenden Natriumpercarbonatpartikel unter Aufrechterhaltung einer Wirbelschichttemperatur von 30 bis 100 °C gleichzeitig oder in beliebiger Reihenfolge hintereinander mindestens eine Natriumcarbonat enthaltende wäßrige Lösung und mindestens eine ein Magnesiumsalz aus der Reihe Mg-sulfat, Mg-chlorid und Mg-carboxylat einer Carbonsäure mit 1 bis 4 C-Atomen enthaltende wäßrige Lösung aufgesprüht, wobei die Gesamtmenge aufgebrachter Hüllkomponenten 1 bis 25 Gew.-% (berechnet hydratfrei), bezogen auf Natriumpercarbonat, beträgt. Vorzugsweise wird Natriumcarbonat in einer Menge von 0,2 bis 10 Gew.-%, Magnesiumchlorid oder Magnesiumcarboxylat (C-Atomzahl 1 bis 4) in einer Menge von 0,2 bis 10 Gew.-% und Natriumsilikat mit einem SiO₂ zu Na₂O-Molverhältnis von 4 bis 1, vorzugsweise 2,5 bis 3,5 , in einer Menge von 0 bis 5 Gew.-% (jeweils bezogen auf das Natriumpercarbonat) aufgesprüht.

Vorzugsweise werden die Natriumcarbonat und die Magnesiumsalz enthaltende Lösung hintereinander aufgesprüht; besonders zweckmäßig ist es, wenn als äußerste Schicht der Partikel eine Soda enthaltende Schicht aufgebracht wird. Gemäß einer weiteren Ausführungsform des Verfahrens wird zunächst eine im wesentlich Natriumcarbonat enthaltende wäßrige Lösung, sodann eine im wesentlichen Magnesiumsulfat enthaltende wäßrige Lösung und zuletzt erneut eine im wesentlichen Natriumcarbonat enthaltende Lösung auf die zu umhüllenden Partikel aufgesprüht.

Gemäß einer weiteren Ausbildungsform des Verfahrens wird eine Natriumcarbonat enthaltende Lösung verwendet, welche zusätzlich Alkalimetallsilikate, vorzugsweise Natriumsilikate, enthält. Alternativ hierzu können auch eine oder mehrere im wesentlichen aus einem Alkalimetallsilikat und/oder teilweise deren Hydraten bestehende Hüllschichten aufgebaut werden, indem eine wäßrige Lösung eines oder mehrerer Alkalimetallsilikate, wie beispielsweise eine Natriumwasserglaslösung, auf die zu umhüllenden Partikel, welche bereits eine oder mehrere Hüllschichten aufweisen können, aufgesprüht wird. Bei Verwendung einer Natriumsilikate enthaltenden Lösung wird ein Molverhältnis von SiO₂ zu Na₂O von 4 zu 1 bis 1 zu 1, vorzugsweise 2,5 zu 1 bis 3,5 zu 1 und insbesondere etwa 3 bis 3,5 zu 1, zugrundegelegt.

Sofern die Hüllkomponenten Natriumcarbonat und die eine oder mehrere Magnesiumverbindungen in einer einzigen Hüllschicht angeordnet sein sollen, werden die Natriumcarbonatlösung und die Magnesiumsalzlösung aus zwei getrennten, in geeigneter Weise in der Wirbelschicht positionierten Düsen oder unter Verwendung einer Dreistoffdüse mit Außenmischung auf die zu umhüllenden Partikel gesprüht. Sofern die Mg-Salz enthaltende Lösung kein Mg-sulfat enthält, kann auch bei dieser Ausführungsform die Natriumcarbonat enthaltende Lösung gleichzeitig Alkalimetallsilikate enthalten; zusätzlich können die Lösungen weitere mit Natriumcarbonat beziehungsweise den Magnesiumverbindungen kompatible Stabilisatoren enthalten.

Die jeweiligen Lösungen werden in einer solchen Menge auf die zu umhüllenden Partikel aufgesprüht, daß die resultierenden umhüllten Partikel die bereits zuvor genannten Mengen an Hüllkomponenten in einer oder mehreren Schichten aufweisen. Die Konzentration der Hüllkomponenten in den aufzusprühenden Lösungen ist an sich beliebig, jedoch werden möglichst hochkonzentrierte Lösungen bevorzugt, um die Menge an zu verdampfendem Wasser möglichst niedrig zu halten. Vorzugsweise werden eine nahezu gesättigte Natriumcarbonatlösung und eine nahezu gesättigte Magnesiumsalzlösung verwendet; Natriumsilikate werden vorzugsweise in Form einer Wasserglaslösung (35 bis 40 °Baumé), die SiO₂ und Na₂O in einem Molverhältnis von etwa 3,5 zu 1 enthält, verwendet.

Die Technik des Aufbringens einer eine oder mehrere Hüllkomponenten enthaltenden wäßrigen Lösung auf zu umhüllende Partikel, also Natriumpercarbonat oder bereits teilweise umhülltes Natriumpercarbonat in der Wirbelschicht ist dem Fachmann bekannt - beispielhaft wird auf die DE-PS 26 22 610 verwiesen. In einer üblichen kontinuierlich oder diskontinuierlich betriebenen Wirbelschichtvorrichtung wird aus dem zu umhüllenden Natriumpercarbonat unter Verwendung der Trocknungsluft eine Wirbelschicht aufgebaut. Aus einer oder mehreren Düsen werden gleichzeitig oder hintereinander die Hüllkomponenten enthaltenden wäßrigen Lösungen aufgesprüht, wobei gleichzeitig das mit den Lösungen eingebrachte Wasser verdampft wird. Die Menge der Trocknungsluft sowie die Temperatur derselben richten sich sowohl nach der Menge des mit den Lösungen in die Wirbelschicht eingebrachten Wassers als auch nach dem gewünschten Trocknungsgrad. Der Fachmann wird die genannten Parameter so aufeinander abstimmen, daß in der Wirbelschicht eine Temperatur im Bereich von 30 bis 100 °C, vorzugsweise 50 bis 80 °C, aufrechterhalten wird. Es kann ferner zweckmäßig sein, wenn die aufzusprühenden Lösungen bereits eine Temperatur im Bereich von 30 bis 80 °C aufweisen. Soweit erforderlich, können die umhüllten Partikel bei 60 bis 100 °C, insbesondere 70 bis 90 °C, nachgetrocknet werden, um eine ausreichende Dehydratisierung der hydratbildenden Hüllkomponenten zu erzielen.

Zur kontinuierlichen Herstellung mehrschichtig umhüllter Natriumpercarbonatpartikel lassen sich vorzugsweise rinnenförmige Wirbelschichttrockner mit zwei oder mehreren Sprühzonen und, sofern erforderlich, einer Nachtrocknungszone verwenden.

Die zu umhüllenden Natriumpercarbonatpartikel können nach einem beliebigen Herstellungsverfahren für Natriumpercarbonat erzeugt worden sein. Zu nennen sind insbesondere: (i) Naßverfahren, wobei Soda und Wasserstoffperoxid in wäßriger Phase umgesetzt und das resultierende Natriumpercarbonat aus der Mutterlauge abgetrennt wird; (ii) Verfahren, wobei feste Soda direkt mit Wasserstoffperoxid umgesetzt wird; (iii) sogenannte Sprühgranulationsverfahren, wobei in einem Wirbelschichttrockner mit oder ohne klassierendem Austrag auf in der Wirbelschicht befindliche Natriumpercarbonatkeime eine Sodalösung und eine Wasserstoffperoxidlösung oder eine Na₂CO₃ und H₂O₂ enthaltende Lösung unter gleichzeitigem Verdampfen von Wasser solange aufgesprüht werden, bis die gewünschte Korngröße erreicht ist - beispielhaft wird auf das Verfahren gemäß DE-OS 27 33 935 verwiesen.

Die Vorteile des erfindungsgemäßen Verfahrens sind darin zu sehen, daß hiermit gleichförmig umhüllte Natriumpercarbonatpartikel mit einer ein- oder mehrschichtigen Umhüllung erhältlich sind, welche sich durch eine außergewöhnlich gute Lagerstabilität auszeichnen. Das Prinzip der Aufbringung einer Umhüllung auf Natriumpercarbonatpartikel und geeignete Vorrichtungen hierfür sind per se der Fachwelt bekannt und erprobt; die Durchführung des Verfahrens ist einfach und die Menge der aufzubringenden Umhüllung läßt sich problemlos steuern.

Die erfindungsgemäß umhüllten Natriumpercarbonatpartikel lassen sich als Bleichkomponente in Wasch-, Reinigungs- und Bleichmittelzusammensetzungen verwenden. Derartige Wasch-, Reinigungs- und Bleichmittelzusammensetzungen zeichnen sich dadurch aus, daß das darin enthaltende umhüllte Natriumpercarbonat selbst in Gegenwart von Zeolithen eine unerwartet hohe Lagerstabilität aufweist, so daß es während der üblichen Lagerung derartiger Zusammensetzungen nur zu einem sehr langsamen Verlust an Aktivsauerstoff kommt. Die in Betracht kommenden Wasch-, Reinigungs- und Bleichmittelzusammensetzungen bestehen aus 1 bis 99 Gew.-% des erfindungsgemäßen umhüllten Natriumpercarbonats und aus der restlichen Menge bis 100 Gew.-% anderen üblichen Komponenten derartiger Zusammensetzungen. Unter diesen Komponenten sind insbesondere zu nennen:
1. Oberflächenaktive Mittel aus der Reihe der kationischen, anionischen, nicht-ionischen, amphoteren oder ampholytischen oberflächenaktiven Mittel.
2. Anorganische und/oder organische Builder, deren Hauptwirkung darin besteht, die für die Härte des Wassers verantwortlichen Metallionen zu sequestrieren beziehungsweise komplexieren, beispielsweise Zeolithe, Schichtsilikate, Polyphosphate, Aminopolyessigsäuren und Aminopolyphosphonsäuren sowie Polyoxycarbonsäuren.
3. Alkalische und anorganische Elektrolyte, wie beispielsweise Alkanolamine und Silikate, Carbonate und Sulfate.
4. Bleichaktivatoren aus der Reihe der N-Acyl-verbindungen und O-Acyl-verbindungen, beispielsweise Tetraacetylethylendiamin (TAED).
5. Weitere Bestandteile der Mittel können sein, Stabilisatoren für Peroxide, wie insbesondere Magnesiumsalze, Antidepositionsmittel, optische Aufheller, Schauminhibitoren, Enzyme, Desinfektionsmittel, Korrosionsinhibitoren, Duftstoffe, Farbstoffe und Mittel zur Regulierung des pH-Wertes. Bezüglich einzelner unter die Stoffklassen 1 bis 5 zählender Verbindungen wird beispielhaft auf die DE-OS 33 21 082, Seiten 14-30 verwiesen.

Die nachfolgenden Beispiele und Vergleichsbeispiele zeigen deutlich die wesentlich höhere Stabilisierungswirkung der erfindungsgemäßen Umhüllung im Vergleich zu ähnlich aufgebauten und ähnlich hergestellten vorbekannten borfreien Umhüllungen auf Natriumpercarbonat.

Bei den Beispielen 3 bis 9 handelt es sich um Ausführungsformen, welche sich auf die nicht beanspruchte Umhüllung mit Natriumcarbonat, Magnesiumsulfat und Natriumsilikat gemäß EP-A 0 623 554 richten, wobei die Reihenfolge der Komponenten derjenigen entspricht, die in der EP-A 0 623 554 als nachteilig angesehen wird. Unter Verwendung von Mg-chlorid oder einem Mg-carboxylat (1 bis 4 C-Atome) anstelle Mg-sulfat lassen sich in analoger Weise anspruchsgemäße bevorzugte umhüllte Natriumpercarbonatpartikel herstellen.

### Beispiele

a) Allgemeine Beschreibung der nicht-erfindungsgemäßen Umhüllung in einem Mischer:
   In einem Pflugschar-Mischer wird das zu umhüllende Natriumpercarbonat, das herstellungsbedingt eine Feuchte um 5 bis 10 Gew.-% aufweist, unter beständigem Mischen mit der oder den Hüllkomponenten behandelt. Sofern trockenes Natriumpercarbonat zum Einsatz gelangt, wird dieses zunächst durch Besprühen mit Wasser oder einer eine oder mehrere Hüllkomponenten enthaltenden wäßrigen Lösung auf den vorgenannten Feuchtegehalt gebracht und anschließend mit weiteren Hüllkomponenten gemischt. Magnesiumsulfat wurde als Heptahydrat, Natriumcarbonat als calcinierte Soda eingesetzt; Alkalisilikat wurde in Form einer Natriumwasserglaslösung (37 °Bé) (SiO₂ : Na₂O = ca. 3,5 zu 1) eingesetzt und auf trockenes Natriumpercarbonat aufgesprüht. Nach beendetem Mischen wird das umhüllte Produkt bei 60 bis 70 °C in einem Wirbelschichttrockner bis zu einer Restfeuchte (nach Karl Fischer) von unter 0,5 % getrocknet.
b) Allgemeine Beschreibung der erfindungsgemäßen Umhüllung in der Wirbelschicht:
   In einem Labor-Wirbelschichttrockner werden auf eine unter Verwendung der Trocknungsluft (Zulufttemperatur 100 bis 110 °C) aufgebaute Wirbelschicht aus dem zu umhüllenden Natriumpercarbonat (NaPc) gleichzeitig oder hintereinander die Hüllkomponenten enthaltenden wäßrigen Lösungen aufgesprüht wobei die Temperatur der Wirbelschicht im Bereich von 40 bis 60 °C gehalten wird; nachgetrocknet wird bei 80 bis 90 °C. Das Aufsprühen der Lösungen erfolgt unter Verwendung von üblichen Zweistoffdüsen mit Luft als Treibmittel, wobei zur Herstellung einschichtiger erfindungsgemäßer Umhüllungen die zu verwendenden Lösungen mittels zwei Zweistoffdüsen, vorzugsweise aber mittels einer Dreistoffdüse mit Außenmischung aufgebracht werden.
   Eingesetzte wäßrige Lösungen: MgSO₄-Lösung (30 bzw. 20 Gew.-% MgSO₄); Na₂CO₃-Lösung (30 bzw. 20 Gew.-% Na₂CO₃); Natriumsilikatlösung ca. 37 °Bé (SiO₂ : Na₂O₃ etwa 3,5 : 1); kombinierte Na₂CO₃/Natriumsilikate-Lösung (20 Gew.-% Na₂CO₃, 8 Gew.-% Natriumsilikate) - zur Herstellung wurde eine Natriumwasserglaslösung mit ca. 37 °Bé und einem SiO₂ zu Na₂O-Molverhältnis von etwa 3,5 zu 1 eingesetzt. Temperatur der aufzusprühenden Lösungen 30 bis 40 °C.
c) Bestimmung der Lagerstabilität in Waschmittelabmischungen:
   Handelsübliches Waschmittelturmpulver (Persil Supra TP), das phosphatfrei, aber zeolithhaltig ist, Aktivator TAED und das zu untersuchende Natriumpercarbonat wurden in einer solchen Menge gemischt, daß das Gemisch 5 % TAED enthielt und der Oₐ-Gehalt etwa 2,35 Gew.-% betrug.
   400 g beziehungsweise 800 g (ab Beispiel 5 und ab Vergleichsbeispiel 10) des Gemischs werden in handelsüblichen, wasserabweisend imprägnierten und verklebten E1-Waschmittelpaketen bei 30 °C und 80 % relativer Feuchte im Klimaschrank gelagert. Pro Entnahmetermin - nach 2, 4 und 8 Wochen - wird ein Paket gelagert. Der Oₐ-Gehalt wird in üblicher Weise jodometrisch bestimmt; aus dem Ausgangs-Oₐ -Gehalt und dem Oₐ-Gehalt nach 2, 4 und 8 Wochen wird der jeweilige Oₐ-Erhalt in % ermittelt.

### Beispiele B 1 bis B 4 und Vergleichsbeispiele VB 1 bis VB 4

Tabelle 1 zeigt die Lagerstabilität in Waschmittelabmischungen des nicht-umhüllten Natriumpercarbonats (VB 1), das als Ausgangsprodukt für die in der Tabelle 1 angeführten umhüllten Natriumpercarbonatpartikel der Beispiele B 1 bis B 4 und Vergleichsbeispiele VB 2 bis VB 4 sowie für die Vergleichsbeispiele VB 5 bis VB 9 gemäß Tabelle 3.

Die zwei- und dreischichtige erfindungsgemäße Umhüllung erfolgte in der in der ersten Spalte der Tabelle 1 angegebenen Reihenfolge der Hüllkomponenten. Bei der nicht-erfindungsgemäßen Umhüllung im Mischer wurden MgSO₄ ^{.} 7 H₂O und Na₂CO₃ gleichzeitig eingesetzt; Restfeuchte des verwendeten NaPc bei VB 2 und VB 3 ca. 7 %; bei VB 4 wurde NaPc zunächst mit einer Wasserglaslösung befeuchtet.

Die Ergebnisse zeigen, daß die Lagerstabilität von erfindungsgemäß umhülltem Natriumpercarbonat diejenige von im Mischer umhülltem Produkt trotz gleicher Hüllmenge wesentlich übersteigt.

Tabelle 2 zeigt den Aktivsauerstoffgehalt (Oₐ-Gehalt) von im Mischer und in der Wirbelschicht umhülltem Natriumpercarbonat nach der Herstellung desselben und nach 10-wöchiger Lagerung (ohne Waschmittelabmischung). Erfindungsgemäß umhülltes Natriumpercarbonat zeichnet sich dadurch aus, daß der Oₐ-Gehalt während der Lagerung in wesentlich geringerem Umfang abnimmt.

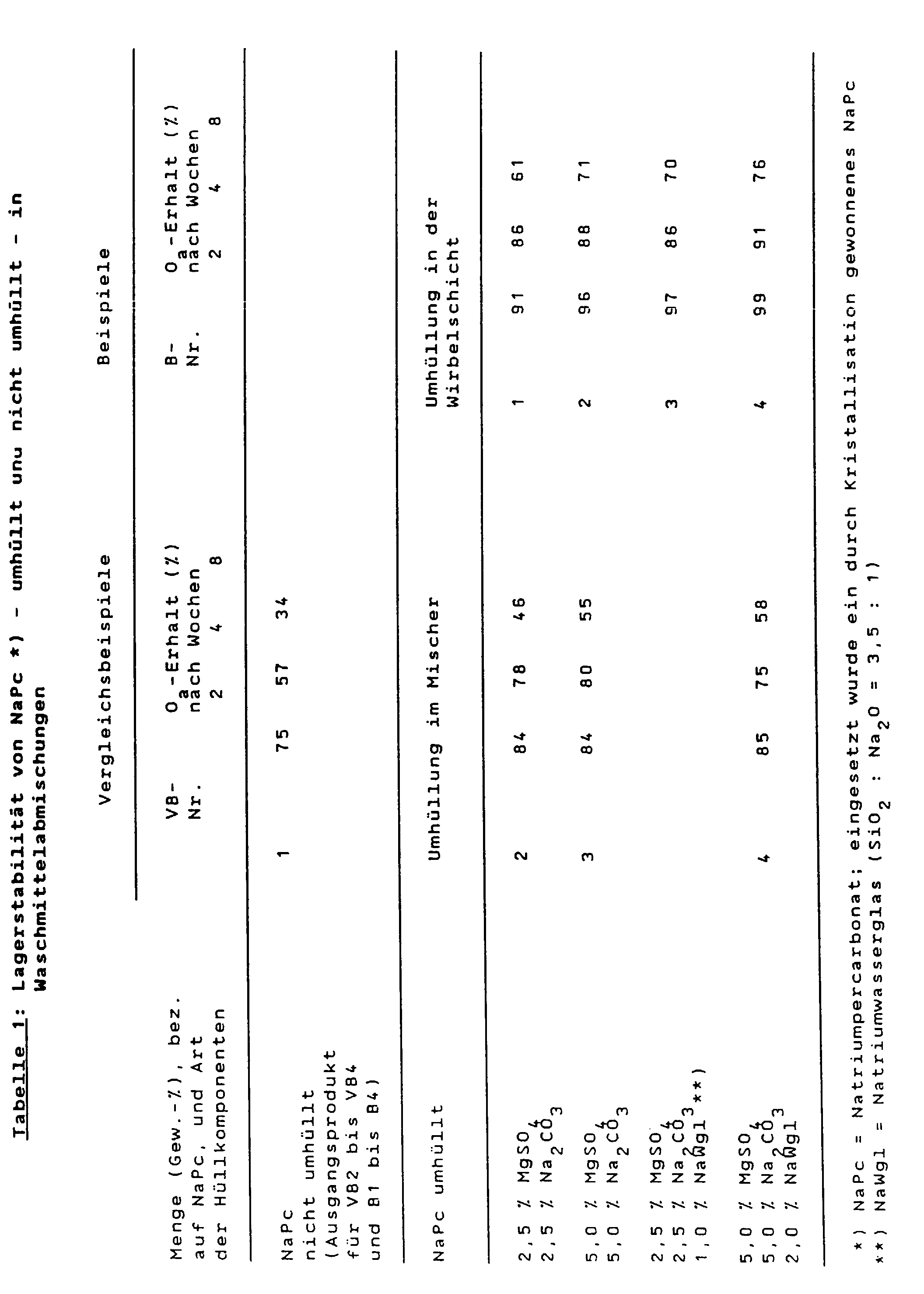

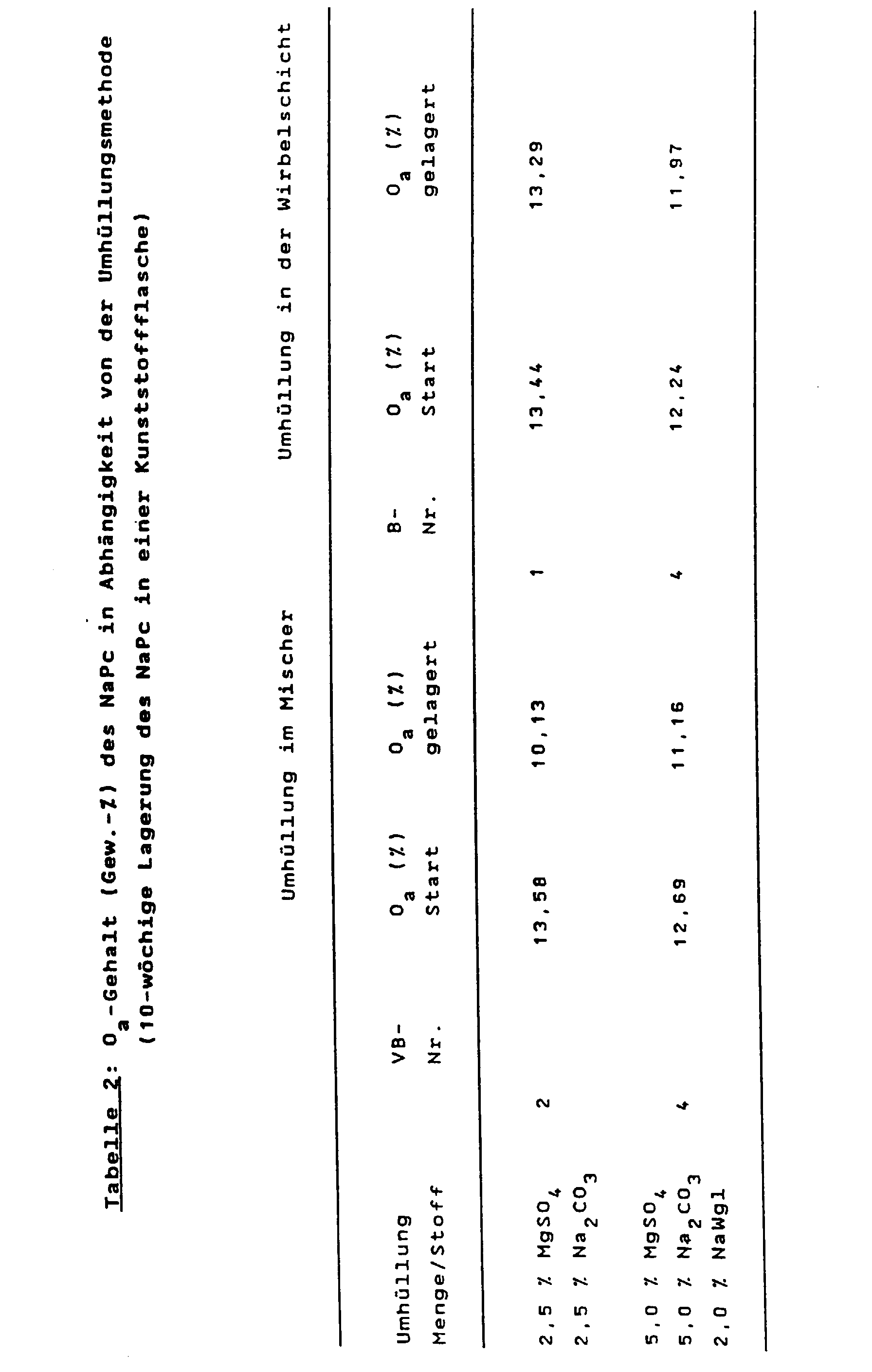

### Vergleichsbeispiele VB 5 bis VB 9

Das Natriumpercarbonat gemäß VB 1 wurde in der Wirbelschicht mit den in Tabelle 3 angegebenen vorbekannten Stoffen und vorbekannten Stoffkombinationen umhüllt. Die Lagerstabilität in Waschmittelabmischungen ist unzureichend, was besonders nach 8-wöchiger Lagerung deutlich wird.

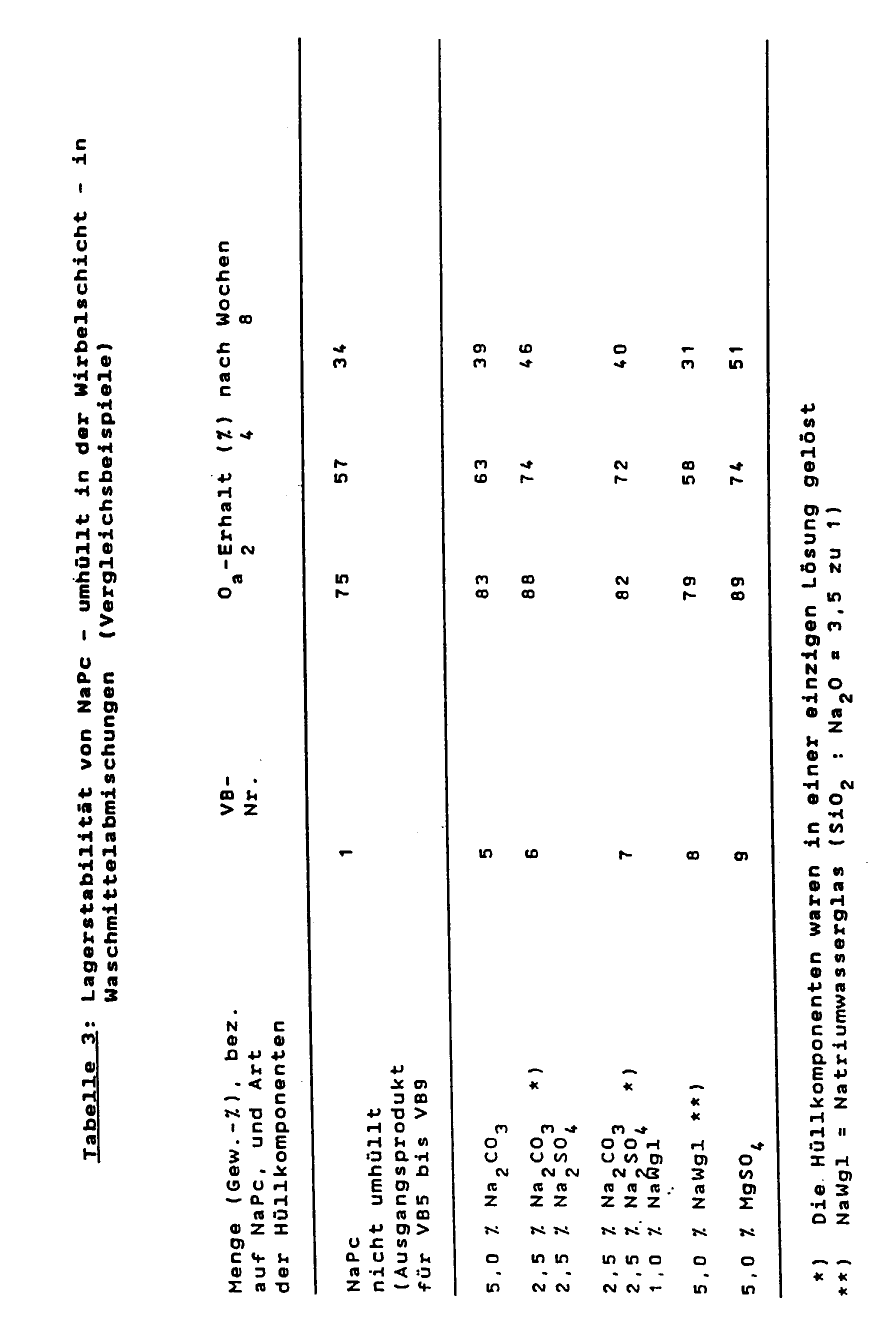

### Beispiele B 5 bis B 7 und Vergleichsbeispiel 10

Tabelle 4 zeigt die Lagerstabilität in Waschmittelabmischungen. Eingesetzt wurde handelsübliches, nicht umhülltes Natriumpercarbonat der Anmelderin (VB 10), das durch Umsetzung von Soda mit Wasserstoffperoxid in wäßriger Phase, Kristallisation des NaPc, Abtrennung aus der wäßrigen Phase und Trocknung hergestellt wurde.

Umhüllt wurde jeweils mit Magnesiumsulfat (5 Gew.-%), Natriumcarbonat (5 Gew.-%) und Natriumwasserglas (2 Gew.-%; SiO₂^{.}Na₂O = 3,5 zu 1) - Gew.-% beziehen sich auf eingesetztes NaPc. Die Umhüllung erfolgt einstufig (B 5) unter gleichzeitiger Verwendung einer MgSO₄-Lösung und einer Na₂CO₃ und Natriumwasserglas enthaltenden wäßrigen Lösung, welche mittels einer Dreistoffdüse auf NaPc gesprüht wurden. Bei zweischichtiger Umhüllung (B 6) wurden die genannten Lösungen hintereinander mittels einer Zweistoffdüse eingesetzt. Bei dreischichtiger Umhüllung (B 7) wurden die MgSO₄-Lösung, eine Na₂CO₃-Lösung und zuletzt eine Natriumwasserglaslösung hintereinander aufgesprüht.

Bei zwei- und dreischichtiger Umhüllung wird eine wesentlich bessere Stabilisierung erzielt als bei einschichtiger Umhüllung.

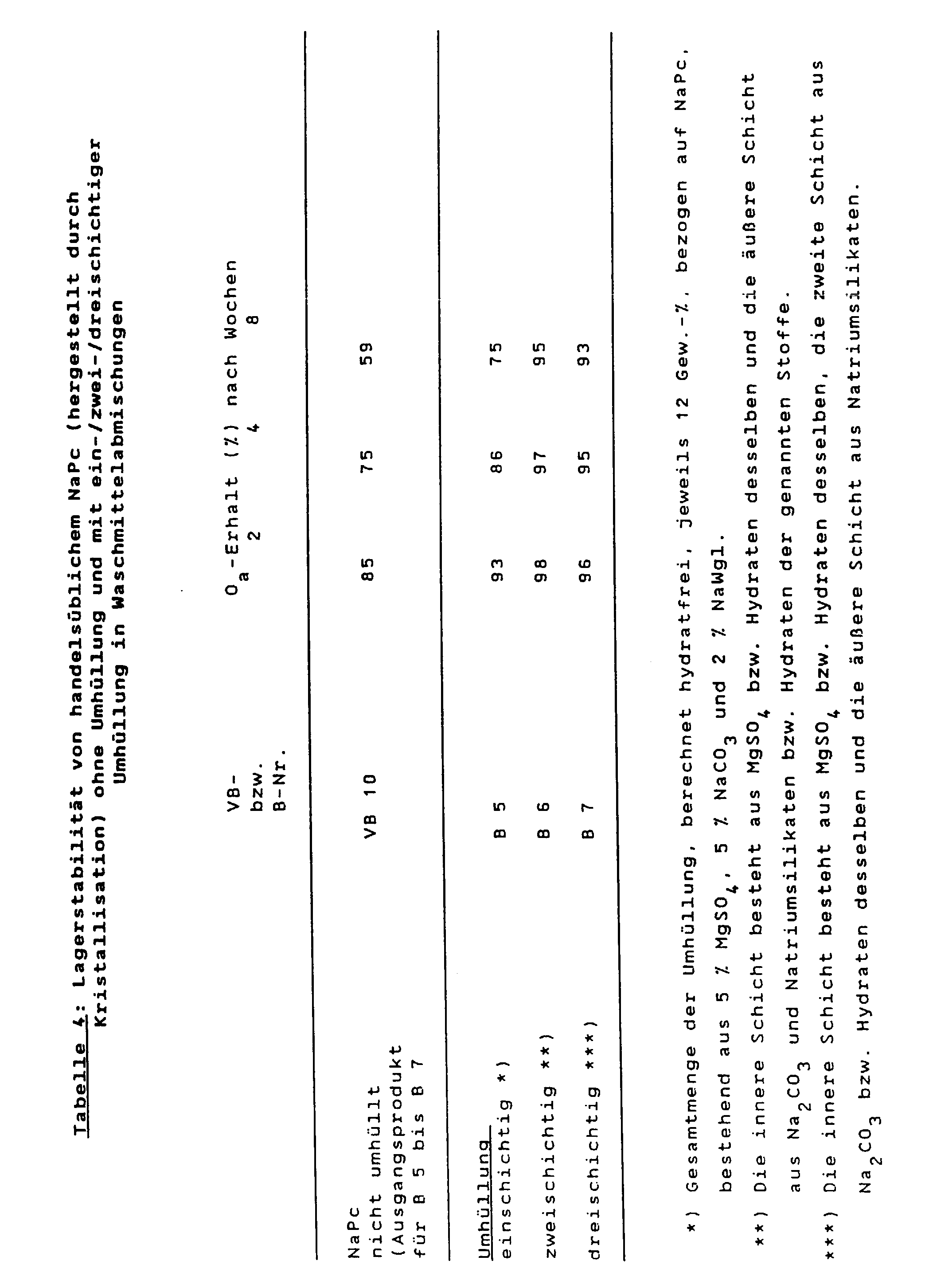

### Beispiele B 8 und B 9, Vergleichsbeispiel VB 11

Eingesetzt wurde ein Natriumpercarbonat (VB 11), das durch Sprühgranulation in der Wirbelschicht in Analogie zum Verfahren der DE 27 33 935 hergestellt wurde; 10 % der Partikel wiesen einen Korndurchmesser zwischen 0,2 und 0,5 mm, 70 % einen solchen zwischen 0,5 und 0,7 mm und 20 % zwischen 0,7 und 1,0 mm auf.

Es wurde in der Wirbelschicht umhüllt, indem zunächst eine MgSO₄-Lösung und anschließend eine Lösung aus Na₂CO₃ und Natriumwasserglas (SiO₂^{.}Na₂O = 3,5 zu 1) aufgesprüht wurden. Temperatur der Sprühlösungen 40 °C. Temperatur der Wirbelschicht während des Aufsprühens 50 bis 60 °C; Temperatur der Wirbelschicht bei der Nachtrocknung 80 °C.

Die Beispiele belegen die außerordentliche Steigerung der Lagerstabilität erfindungsgemäß umhüllter Natriumpercarbonatpartikel.

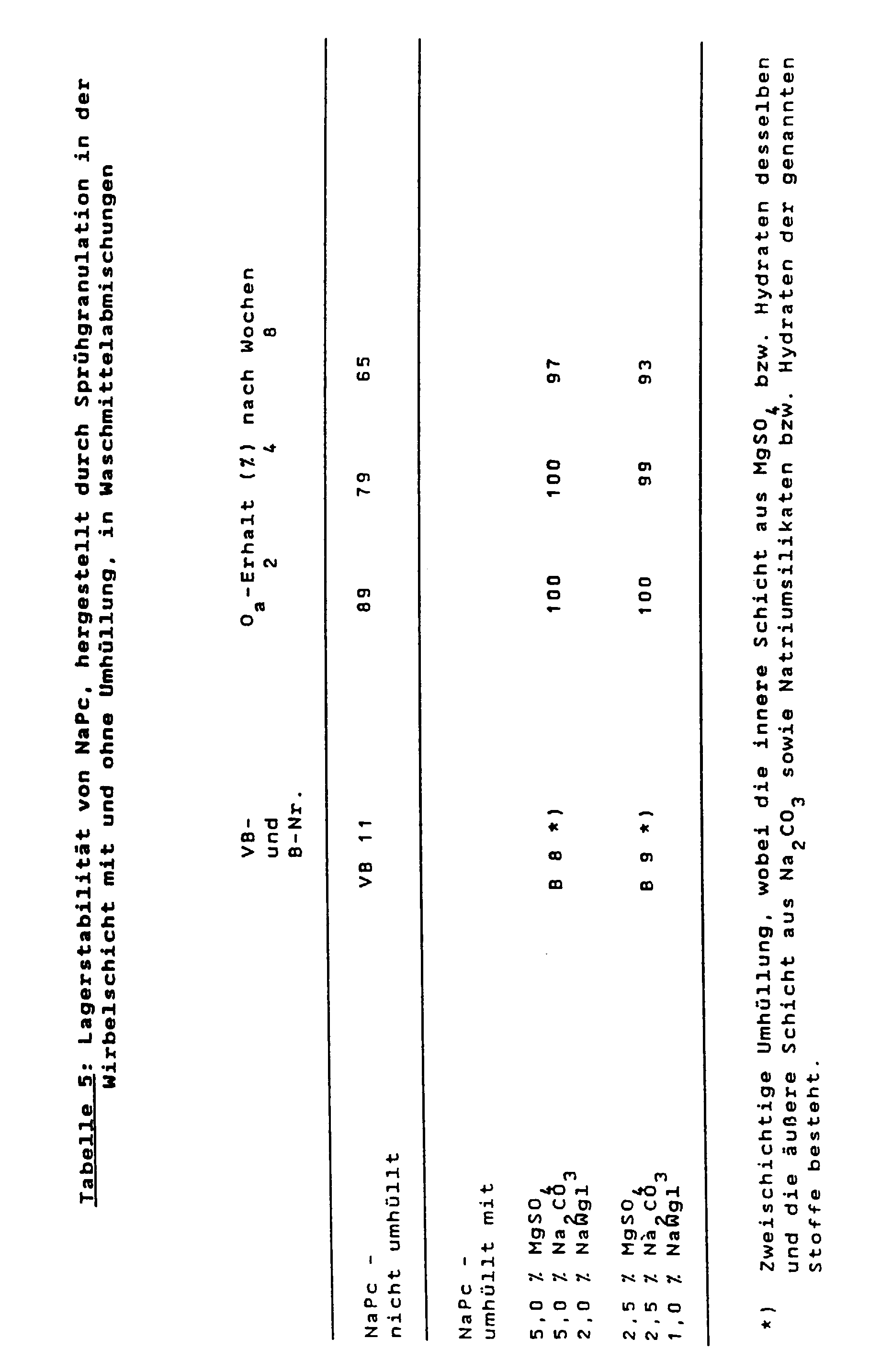

## Patentansprüche

1. Ein- oder mehrschichtig umhüllte Natriumpercarbonatpartikel mit einem Kern aus Natriumpercarbonat und einer Natriumcarbonat und eine Magnesiumverbindung und gegebenenfalls weitere Hüllkomponenten enthaltenden Umhüllung, welche 0,5 bis 25 Gew.-% (berechnet hydratfrei) des Natriumpercarbonats ausmacht, ausgenommen ein mit Magnesiumsulfat, Alkalisilikat und Natriumcarbonat umhülltes Natriumpercarbonat,
dadurch erhältlich,
daß man auf die in einer Wirbelschicht befindlichen Natriumpercarbonatpartikel unter Aufrechterhaltung einer Wirbelschichttemperatur von 30 bis 100 °C gleichzeitig oder in beliebiger Reihenfolge hintereinander eine mindestens Natriumcarbonat enthaltende wäßrige Lösung und eine mindestens ein Magnesiumsalz aus der Reihe Mg-sulfat, Mg-chlorid und Mg-carboxylat einer Carbonsäure mit 1 bis 4 C-Atomen enthaltende wäßrige Lösung sprüht, wobei Wasser verdampft wird.

2. Umhüllte Natriumpercarbonatpartikel nach Anspruch 1, dadurch erhältlich,
daß als weitere Hüllkomponente Alkalimetallsilikat und/oder -hydrat, vorzugsweise Natriumsilikat, verwendet wird.

3. Umhüllte Natriumpercarbonatpartikel nach Anspruch 1, dadurch erhältlich,
daß die Hüllkomponenten teilweise hydratisiert sind.

4. Umhüllte Natriumpercarbonatpartikel nach Anspruch 1 bis 3,
dadurch erhältlich,
daß eine Umhüllung verwendet wird, die 1 bis 15 Gew.-% des Natriumpercarbonats ausmacht.

5. Umhüllte Natriumpercarbonatpartikel nach einem der Ansprüche 1 bis 4,
dadurch erhältlich,
daß man zunächst eine ein Mg-Salz enthaltende wäßrige Lösung und anschließend eine Natriumcarbonat enthaltende wäßrige Lösung aufsprüht.

6. Verfahren zur Herstellung von umhülltem
Natriumpercarbonat nach Anspruch 1 bis 5,
bei dem auf das Natriumpercarbonat, das sich in einer auf 30 bis 100 °C gehaltenen Wirbelschicht befindet, Natriumcarbonat in einer Menge von 0,2 bis 10 Gew.-%, Magnesiumchlorid oder Magnesiumcarboxylat (C-Atomzahl 1 bis 4) in einer Menge von 0,2 bis 10 Gew.-% und Natriumsilikat mit einem SiO₂ zu Na₂O-Molverhältnis von 4 bis 1, vorzugsweise 2,5 bis 3,5 , in einer Menge von 0 bis 5 Gew.-% (jeweils bezogen auf das Natriumpercarbonat) aufgesprüht werden.

7. Verfahren nach Anspruch 6,
dadurch gekennzeichnet,
daß zuerst die Magnesiumsalz enthaltende Lösung und dann die Natriumcarbonat enthaltende Lösung aufgesprüht wird.

8. Verwendung der umhüllten Natriumpercarbonatpartikel nach den Ansprüchen 1 bis 5 als Bleichkomponente in Wasch-, Reinigungs- und Bleichmitteln, insbesondere in zeolithhaltigen Wasch- und Bleichmitteln.

## Claims

1. Single-layered or multilayered coated sodium percarbonate particles having a core of sodium percarbonate and a coating containing sodium carbonate and a magnesium compound and optionally other coating components, which coating constitutes from 0.5 to 25 wt.% (calculated free from hydrate) of the sodium percarbonate, excluding a sodium percarbonate coated with magnesium sulphate, with alkali metal silicate and with sodium carbonate, obtainable by spraying onto the sodium percarbonate particles in a fluidised bed, while maintaining a fluidised bed temperature of from 30°C to 100°C, simultaneously or in any order one after the other, an aqueous solution containing at least sodium carbonate and an aqueous solution containing at least one magnesium salt from among Mg sulphate, Mg chloride and Mg carboxylate of a carboxylic acid having 1 to 4 C atoms, water being evaporated in the process.

2. Coated sodium percarbonate particles according to claim 1,
obtainable by using alkali metal silicate and/or alkali metal hydrate, preferably sodium silicate, as an additional coating component.

3. Coated sodium percarbonate particles according to claim 1,
obtainable by using partly hydrated coating components.

4. Coated sodium percarbonate particles according to claims 1 to 3,
obtainable by using a coating which constitutes from 1 to 15 wt.% of the sodium percarbonate.

5. Coated sodium percarbonate particles according to one of claims 1 to 4,
obtainable by spraying on first of all an aqueous solution containing an Mg salt and then an aqueous solution containing sodium carbonate.

6. A process for the production of coated sodium percarbonate according to claims 1 to 5, wherein sodium carbonate in a quantity of from 0.2 to 10 wt.%, magnesium chloride or magnesium carboxylate (number of C atoms being 1 to 4) in a quantity of from 0.2 to 10 wt.% and sodium silicate having a molar ratio of SiO₂ to Na₂O of 4 to 1, preferably 2.5 to 3.5, are sprayed in a quantity of from 0 to 5 wt.% (in each case based on sodium percarbonate) onto the sodium percarbonate, which is in a fluidised bed maintained at 30°C to 100°C.

7. A process according to claim 6,
characterised in that
first of all the solution containing magnesium salt and then the solution containing sodium carbonate are sprayed on.

8. The use of the coated sodium percarbonate particles according to claims 1 to 5 as bleaching components in detergents, cleaning agents and bleaches, in particular in zeolite-containing detergents and bleaching agents.

## Revendications

1. Particules de percarbonate de sodium enrobées à une ou plusieurs couches avec un noyau en percarbonate de sodium et un enrobage contenant du carbonate de sodium et un dérivé du magnésium et le cas échéant d'autres composants d'enrobage qui représente de 0,5 à 25 % en poids (calculé sans hydrate) du percarbonate de sodium, exception faite d'un percarboante de sodium enrobé avec du sulfate de magnésium, un silicate de métal alcalin et du carbonate de sodium,
accessibles en ce qu'
on pulvérise sur les particules de percarbonate de sodium qui se trouvent dans un lit fluidifié tout en maintenant une température de lit fluidifié de 30 à 100°C simultanément ou une succession quelconque l'une après l'autre une solution aqueuse contenant au moins du carbonate de sodium et une solution aqueuse contenant au moins un sel de magnésium choisi dans la série du sulfate de magnésium, du chlorure de magnésium et d'un carboxylate de magnésium d'un acide carboxylique ayant de 1 à 4 atomes de carbone, pour lesquelles l'eau est évaporée.

2. Particules de percarbonate de sodium enrobées selon la revendication 1,
accessibles en ce qu'
on utilise comme autre composant d'enrobage un silicate de métal alcalin et/ou un hydrate de préférence le silicate de sodium.

3. Particules de percarbonate de sodium enrobées selon la revendication 1,
accessibles en ce que
les composants d'enrobage sont partiellement hydratés.

4. Particules de percarbonate de sodium enrobées selon la revendication 1,
accessibles en ce qu'
on utilise un enrobage qui représente de 1 à 15 % en poids du percarbonate de sodium.

5. Particules de percarbonate de sodium enrobées selon l'une des revendications 1 à 4
accessibles en ce qu'
on applique par pulvérisation en premier lieu une solution aqueuse contenant un sel de Mg et ensuite une solution aqueuse contenant le carbonate de sodium.

6. Procédé de préparation de percarbonate de sodium enrobé selon l'une des revendications 1 à 5
dans lequel
on applique par pulvérisation sur le percabonate de sodium qui se trouve sur un lit fluidifié maintenu de 30 à 100°C, du carbonate de sodium en quantité allant de 0,2 à 10 % en poids, du chlorure de magnésium ou un carboxylate de magnésium (nombre d'atomes de C 1 à 4) en une quantité allant de 0,2 à 10 % en poids et du silicate de sodium ayant un rapport molaire SiO₂ à Na₂O de 4 à 1, de préférence de 2,5 à 3,5, en une quantité allant de 0 à 5 % en poids (à chaque fois rapporté au percarbonate de sodium).

7. Procédé selon la revendication 6,
caractérisé en ce qu'
on applique par pulvérisation en premier lieu la solution contenant le sel de magnésium et ensuite la solution contenant le carbonate de sodium.

8. Utilisation des particules de percarbonate de sodium enrobées selon les revendications 1 à 5 comme composant de blanchiment dans des produits de lavage, de nettoyage et de blanchiment, en particulier dans des produits de lavage et de blanchiment contenant des zéolites.
